# FASCICULE DE BREVET EUROPEEN

(11) **EP 2 859 312 B1**
(45) Date de publication et mention de la délivrance du brevet: **27.05.2020**
(21) Numéro de dépôt: 13729004.5
(22) Date de dépôt: 06.06.2013
(51) Int. Cl.: G01F 23/26

(54) **ENSEMBLE DE JAUGE DE NIVEAU CAPACITIVE POUR UN RÉCIPIENT DE GAZ PRESSURISÉ OU LIQUÉFIÉ, ET ENSEMBLE DE ROBINET ET DE JAUGE DE NIVEAU CAPACITIVE**
KAPAZITIVE FÜLLSTANDSONDE FÜR EINEN FLÜSSIGGAS-BEHÄLTER, UND EINHEIT BESTEHEND AUS EINEM VENTIL UND EINER KAPAZITIVEN FÜLLSTANDSONDE
CAPACITIVE LEVEL GAUGE ASSEMBLY FOR A CONTAINER FOR PRESSURISED OR LIQUEFIED GAS, AND ENTITY CONSISTING OF A VALVE AND A CAPACITIVE LEVEL GAUGE

(30) Priorité: 08.06.2012 LU 92018
(43) Date de publication de la demande: 15.04.2015
(73) Titulaire: Luxembourg Patent Company S.A., 7440 Lintgen (LU)
(72) Inventeur: MUZZO, Paul, F-57970 Yutz (FR); SCHMITZ, Isabelle, L-8151 Bridel (LU)
(74) Mandataire: Office Freylinger
(86) Numéro de dépôt international: PCT/EP2013/061725
(87) Numéro de publication internationale: WO 2013/182649

(56) Documents cités:
- DE-A1- 19 728 280
- DE-U1- 20 313 695
- US-A- 2 941 403
- US-A- 5 701 932
- US-A1- 2005 150 568
- US-A1- 2011 199 103

## Description

### Domaine technique

La présente invention concerne généralement le domaine des jauges de niveau pour un récipient de gaz pressurisé ou liquéfié, et plus particulièrement un ensemble de jauge de niveau du type capacitif.

### Etat de la technique

Une jauge de ce type, intégrée dans un robinet, est par exemple décrite dans le EP 0 709 656 (ou US 5 701 932 A). La jauge est constituée d'une tige allongée et d'un tube cylindrique entourant coaxialement ladite tige, le tube et la tige étant portés par le corps du robinet et s'étendant sur toute la hauteur du récipient. L'électrode-tube extérieure est portée directement par la base, dans laquelle elle est vissée. L'électrode centrale -une tige pleine- est supportée par l'électrode extérieure et par des joints pour assurer l'isolation électrique. Des entretoises sont distribuées sur la longueur de la tige pour maintenir un espace de mesure constant entre les deux électrodes. En effet, le principe de mesure d'une telle jauge est basé sur la variation de capacité mesurée entre les électrodes en fonction du niveau de fluide dans l'espace inter-électrodes et donc dans le récipient.

Si un tel design de jauge capacitive a fait ses preuves dans la pratique, il présente un certain nombre de contraintes. Le système de fixation des électrodes requiert un montage minutieux, puis un test de fonctionnement et d'étanchéité, ce qui implique que les électrodes doivent être montées en usine. Le corollaire est alors l'encombrement du dispositif, notamment eu égard à son transport, en particulier lorsque les électrodes sont longues.

Le DE 197 28 280 décrit une jauge capacitive dans laquelle l'électrode intérieure est montée dans le corps au moyen d'un manchon isolant, et placée dans un fourreau isolant.

D'autres jauges capacitives sont décrites dans le US 2011/0199103, le US 2005/150568 et le US2941403.

### Objet de l'invention

L'objet de la présente invention est de proposer une jauge de niveau capacitive de conception plus robuste et plus flexible dans sa mise en oeuvre

### Description générale de l'invention

Conformément à l'invention, cet objectif est atteint par un ensemble de jauge de niveau capacitive pour récipient de gaz pressurisé ou liquéfié comme défini par la revendication 1, et comprenant :
un corps avec une base apte à être montée dans une ouverture dudit récipient ;
une paire d'électrodes capacitives dimensionnées pour s'étendre dans le récipient, de préférence à partir de la base du corps et sur la hauteur du récipient, la paire d'électrode comprenant une première électrode, intérieure, et une deuxième électrode tubulaire entourant la première électrode, préférablement de manière concentrique ;
un circuit électrique disposé dans le corps et connecté aux électrodes.

Des moyens porte-électrodes sont montés de manière étanche dans le corps et connectés au circuit électrique, ces moyens porte-électrodes étant configurés pour supporter fermement les deux électrodes avec un espace de mesure entre celles-ci. On appréciera que les moyens porte-électrodes comprennent un support métallique monté de manière étanche dans le corps et électriquement isolé de celui-ci, la première électrode étant fixée au support métallique, et le support métallique étant connecté au circuit électrique.

L'ensemble de jauge selon l'invention est conçu de sorte que le corps avec les moyens porte-électrodes forme un module (module-corps) étanche et connecté électriquement, auquel il suffit de fixer les électrodes de mesure pour que la jauge soit opérationnelle. En effet, le support métallique est monté étanche dans le corps et isolé électriquement du reste du corps. L'électrode interne est alors fixée, respectivement accouplée, au support métallique par tout moyen approprié.

Une telle conception du corps de jauge en module prêt à l'emploi a de nombreux avantages pratiques :
- l'assemblage du corps de jauge avec les moyens de support d'électrode montés étanches est réalisé en usine, ainsi que le test d'étanchéité. On peut donc tester ce module sans les électrodes de mesure, ce qui simplifie la procédure de test.
- on peut fixer au module-corps des électrodes de toutes tailles, sans intervenir sur l'étanchéité du module-corps. Puisque la fixation des électrodes ne se fait pas dans une zone critique, le client lui-même peut fixer les électrodes sur le module-corps.
- le conditionnement de la jauge, pour l'affrètement, est également simplifié. Le module corps peut être emballé individuellement, dans un emballage approprié. Les électrodes sont emballées comme de simples tubes ; on peut également livrer avec chaque module-corps un jeu de plusieurs paires d'électrodes de mesures de longueur différentes. La présente jauge rend donc la logistique plus flexible.

On comprendra donc que la présente invention également un tel ensemble de jauge, toutefois sans les électrodes fixées aux moyens porte-électrodes.

De préférence, le moyen de fixation pour la deuxième électrode entoure le support métallique. Pour un accès facilité, le support métallique de la première électrode s'étend, vu dans l'axe longitudinal des électrodes, au-delà du moyen de fixation de la deuxième électrode. La première électrode peut être une tige pleine ou un tube creux.

La fixation de la première électrode au support métallique se fait de toute manière appropriée, par exemple par sertissage, vissage ou soudure. Dans ce contexte, on pourra utiliser toute sorte de géométrie pour les parties en contact, respectivement accouplée, du support métallique et de la première électrode.

De préférence, le corps comprend un passage interne traversant, s'étendant d'un orifice dans la base du corps à un autre orifice en partie supérieure du corps; et les moyens porte-électrodes sont agencés dans la région de base du corps, le support métallique de la première électrode étant partiellement agencé dans ledit passage traversant.

Le support métallique a préférablement une forme cylindrique allongée et est maintenu dans le passage traversant au moyen d'un joint d'étanchéité empêchant le passage de gaz en aval du joint d'étanchéité.

Selon une exécution préférée, le support métallique comprend une portion de pied ou d'extrémité qui est reçue dans un canal du joint. Le joint est quant à lui disposé dans une section de transition évasée et a une portion évasée dont le profil extérieur est adapté à cette section de transition, de préférence tronconique. Pour un bon maintien du joint et donc de l'électrode, et une bon niveau d'étanchéité, le joint est comprimé par une pièce de montage positionnée dans une section aval de la zone de transition et s'appuyant sur un épaulement arrière du joint à la base de sa portion évasée.

La deuxième électrode, extérieure, est avantageusement fixée directement à la partie terminale de la base, opérant également une mise à la masse. La deuxième électrode est par exemple insérée dans une partie terminale du corps traversée par le passage, de préférence en butée contre un épaulement. La deuxième électrode peut être maintenue ainsi en position par serrage ou friction, par exemple au moyen d'un système de raccord à olive ou tout autre mécanisme approprié.

Pour une bonne précision de mesure, des entretoises sont placées dans l'espace de mesure entre les deux électrodes. Différentes géométries/configurations d'entretoises peuvent être envisagées, celles-ci étant de préférence dans un matériau synthétique isolant électriquement présentant une rigidité diélectrique appropriée.

On peut utiliser des joints annulaires (par ex. toriques) ou des segments, de préférence logés dans des gorges annulaires prévues à diverses positions le long de l'électrode intérieure (préféré dans le cas d'une électrode pleine). On peut également employer des espaceurs annulaires de section rectangulaire positionnés à la surface de la première électrode, sans gorge, éventuellement comprenant un tenon s'engageant dans un trou dans la première électrode pour un maintien axial amélioré. Un autre type d'entretoise comprend une base annulaire s'appuyant sur l'électrode intérieure à partir de laquelle s'étendent quelques bras radiaux ; l'espace subsistant entre les bras radiaux permet le passage du fluide en direction axiale dans l'espace de mesure.

Pour faciliter la pénétration de fluide dans l'espace inter-électrodes et le long des électrodes, l'électrode extérieure peut comprendre des trous distribués sur sa longueur. On peut également prévoir des trous transversaux dans l'électrode centrale.

On notera que dans le principe de conception modulaire du corps de jauge, ce dernier comprend de préférence un minimum d'électronique embarquée. Le circuit électrique intégré dans le corps peut par exemple comprendre une mémoire morte programmable (type EEPROM ou autre), ce qui permet d'associer à la jauge diverses données, par exemple une ou plusieurs des données de suivantes :
- un numéro de série de la jauge ;
- la longueur des électrodes ;
- des valeurs de pré-calibration ;
- le type de gaz contenu dans le récipient/bouteille.

La mémoire morte programmable est avantageusement programmée pour réaliser une mesure de capacité et délivrer un signal digital représentatif du niveau de gaz ou liquide dans le récipient ; ce signal peut par exemple être la valeur de capacité mesurée ou directement un niveau de remplissage. De préférence, un connecteur électrique est monté en partie supérieure de la jauge, lequel est connecté au circuit électrique interne. Le connecteur permet de raccorder la jauge à un module afficheur ou à un système informatique qui va traiter et/ou afficher le signal délivré par la jauge, ou encore à un module de transmission sans fil du signal. Dans le cas du module afficheur, celui-ci peut réaliser simplement un affichage de l'indication de niveau, ou être programmé pour convertir une valeur de capacité en niveau de remplissage.

Les variantes ci-dessus ainsi que d'autres sont reprises dans les revendications dépendantes annexées. Selon un autre aspect de la présente invention, la présente jauge de niveau peut être combinée avec un robinet, dans un même corps pouvant être monté dans l'ouverture d'un récipient sous pression.

La revendication 15 définit un module de jauge de niveau capacitive pour un récipient de gaz pressurisé ou liquéfié selon la présente invention.

### Brève description des dessins

D'autres particularités et caractéristiques de l'invention ressortiront de la description détaillée de quelques modes de réalisation avantageux présentés ci-dessous, à titre d'illustration, en se référant aux dessins annexés. Ceux-ci montrent:
- Fig.1:: une vue en coupe longitudinale d'un mode de réalisation de la présente jauge de niveau capacitive ;
- Fig.2:: une vue en coupe longitudinale du module-corps (seul) de la jauge de la Fig.1 ;
- Fig.3:: une vue en coupe du joint d'étanchéité ;
- Fig.4:: une vue en coupe longitudinale d'un autre mode de réalisation de la présente jauge de niveau capacitive ; et
- Fig.5:: .un schéma de principe de l'ensemble de jauge avec un module afficheur séparé pouvant être branché sur le corps de jauge.

Sur les figures, les mêmes références désignent des éléments identiques ou similaires.

### Description détaillée d'un mode de réalisation préféré

L'ensemble de jauge de niveau selon la présente invention est conçu de sorte que le corps constitue un module fini, étanche et opérationnel, auquel il suffit de fixer les électrodes pour pouvoir l'installer sur un récipient.

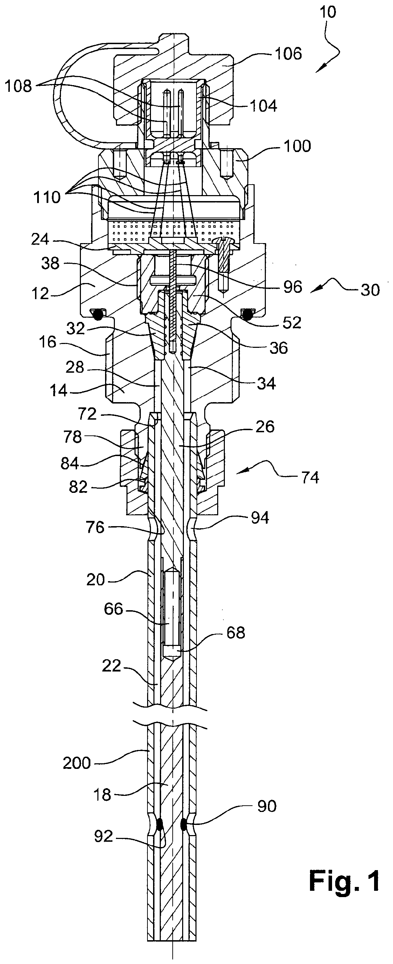

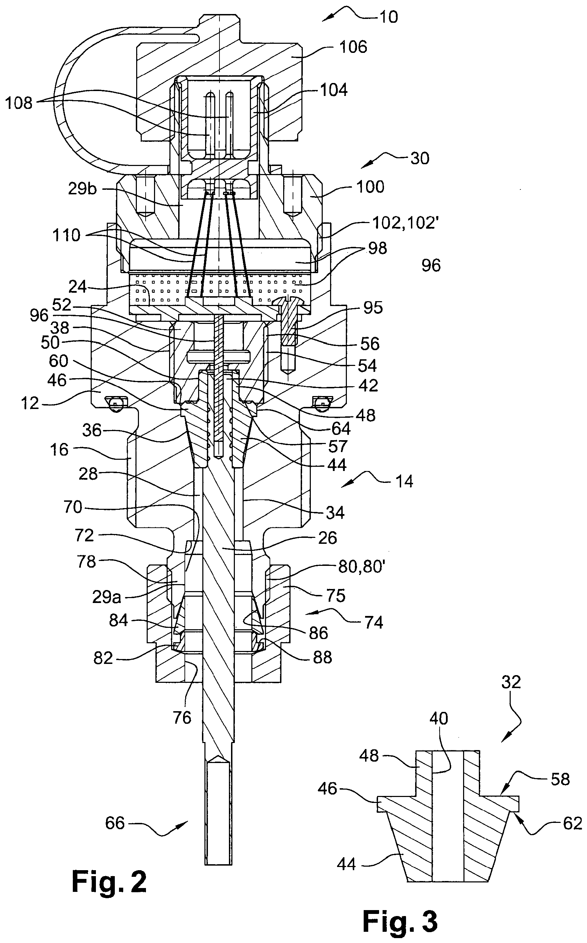

Un premier mode de réalisation du présent ensemble de jauge de niveau (ci-après aussi simplement : la jauge) est illustré aux Figures 1 et 2. La jauge 10 comprend un corps 12 avec une partie inférieure ou base 14, apte à être montée dans une ouverture dudit récipient (non montré). Le corps est généralement en matière métallique, par exemple en laiton ou tout autre métal ou alliage approprié. La base 14 est pourvue d'un filetage externe 16 pour le montage sur le récipient de gaz (non montré), par exemple bouteille, réservoir, etc.

Une paire d'électrodes capacitives, repérées 18 et 20, sont portées par le corps 12 et dimensionnées pour s'étendre sur la hauteur du récipient, au choix sur l'ensemble de la hauteur ou sur une hauteur prédéterminée. Comme on le voit, il y a une première électrode 18, intérieure, et une deuxième électrode 20 tubulaire entourant la première électrode, un espace de mesure annulaire 22 étant préservé entre celles-ci. Les électrodes 18 et 20 ont de préférence une forme cylindrique/tubulaire et sont montées concentriques.

Un circuit électrique 24 connecté aux électrodes 18, 20 est de préférence disposé dans le corps 12.

On appréciera que des moyens porte-électrodes sont montés de manière étanche dans le corps 12 et connectés au circuit électrique 24. Les moyens porte-électrodes sont configurés pour supporter fixement les deux électrodes 18, 20 avec l'espace de mesure 22 entre celles-ci. Les moyens porte-électrodes comprennent avantageusement un support métallique 26, de préférence une tige support métallique, monté de manière étanche dans le corps de jauge 12 et électriquement isolé de celui-ci, la première électrode 18 étant fixée audit support métallique, et le support métallique 26 étant connecté au circuit électrique 24.

Les moyens porte-électrodes sont initialement montés dans le corps 12 de manière étanche, et raccordés électriquement. Il suffit donc de fixer ou d'accoupler à ceux-ci des électrodes 18, 20 de la longueur désirée, pour rendre la jauge opérationnelle, prête à monter dans un récipient. Il n'est pas nécessaire de tester l'étanchéité et/ou la fonctionnalité de la jauge 10 après montage des électrodes, puisque leur montage n'affecte pas l'intérieur du corps de jauge.

Dans la présente exécution, le corps 12 comprend un passage interne traversant 28, s'étendant de préférence d'un orifice 29a situé dans l'extrémité de la base 14 à un autre orifice 29b situé en partie haute 30 du corps, laquelle, en utilisation, est située hors du récipient sur lequel la jauge 10 est montée.

Le support métallique 26 est monté au moyen d'un joint 32 qui garantit l'étanchéité aux gaz en aval de ce joint 32. Le joint 32 assure en outre une isolation électrique du support métallique 26 par rapport au corps 12.

Dans la variante illustrée aux Figures, le passage 28 comprend, en partant de la base 12, une section amont 34 (côté haute pression), puis une section de transition 36 dont le diamètre s'élargit globalement vers une section aval 38 ou basse pression, accueillant entre autres le circuit électrique 24. Le joint 32 est positionné dans la zone de transition 36 et a un profil extérieur adapté à la section variable, par exemple tronconique, de la zone de transition 36.

Le joint 32 comprend un canal central 40, de préférence traversant, qui reçoit une section de pied 42 de la tige-support métallique 26. Vu dans le sens axial, en venant de la base 14, le joint 32 comprend une première portion 44 de forme évasée coopérant avec la section de transition 36, puis une deuxième portion 46 formant saillie radiale, et enfin une portion cylindrique 48. La portion cylindrique 48 s'adapte dans une cavité 50 prévue dans une bague 52 qui assure le maintien et la compression du joint 32, par le côté basse pression. La bague 52 comprend un filetage externe 54 qui coopère avec un pas de vis correspondant 56 dans la section basse pression 38. On notera que, puisque le canal central 40 du joint 32 est traversant, et que le pied de tige 42 s'étend sur toute la hauteur du canal 40, la tige support 26 est également maintenue axialement par la bague 52.

Les géométries de la section de transition et du joint 32, et la compression du joint 32 par la bague 52, garantissent une étanchéité irréprochable. La bague 52 a une surface frontale 57, par laquelle elle prend appui sur un épaulement arrière 58 de la saillie radiale annulaire 46, et se visse contre un épaulement 60 de la section aval 38. Sous la contrainte de la bague 52, les parois coniques du joint 32 sont pressées contre celles de la section de transition 36. En outre, la saillie radiale 46 qui comprend un épaulement frontal 62 à la base de la portion évasée 44 se retrouve comprimée axialement contre un épaulement 64 correspondant, à la base de la section de transition 36.

La tige support 26 s'étend partiellement dans le passage 28, dans la région de la base 12, et dépasse au-delà de l'extrémité inférieure de la base 12. Cela permet un accès plus facile à l'extrémité 66 de la tige support 26 pour la fixation de l'électrode intérieure 18.

Aux fins de montage, l'extrémité libre 66 de la tige support 26 a été usinée pour y former un alésage débouchant dans la face avant de celle-ci, l'électrode centrale 18 étant conçue pour s'adapter sur cette extrémité tubulaire 66. A cet effet, l'électrode centrale 18 comprend également une portion de couplage creuse/tubulaire 68, avec un diamètre intérieur correspondant sensiblement au diamètre extérieur de l'extrémité de couplage 66 de la tige-support 26. Un couplage permanent et assurant une continuité électrique peut être obtenu par sertissage (non montré) au niveau des sections tubulaires qui se recouvrent.

L'électrode extérieure 20 est supportée directement par la partie terminale de la base 14. Le passage 28 comprend, sur sa portion d'entrée à partir de l'orifice 29a, un alésage 70 adapté pour recevoir l'électrode tubulaire extérieure 20, venant en butée contre un épaulement 72. Le diamètre interne de cette portion d'entrée correspond sensiblement au diamètre extérieur de l'électrode tubulaire 20. De préférence, l'électrode tubulaire 20 a un diamètre intérieur sensiblement égal à celui du passage 28 en aval de la portion d'entrée, et la tige support 26 a un diamètre externe sensiblement égal à celui de l'électrode centrale 18; ainsi, après montage, on a une continuité géométrique et un espace de mesure 22 constant sur toute la hauteur de jauge jusqu'au joint 32.

Une fixation ferme de l'électrode tubulaire 20 est avantageusement réalisée à la manière d'un raccord à double bague (ou raccord à olive). Un écrou 74 comprenant un corps cylindrique 75 avec orifice 76 dont le diamètre est adapté au passage, avec un jeu de montage, de l'électrode tubulaire 20 et vient se visser sur la partie terminale 78 de la base 14. Le corps cylindrique 75 de l'écrou 74 comprend un pas de vis 80 qui coopère avec un filetage externe 80' sur la partie terminale 78. Deux bagues 82 et 84 sont disposées dans l'écrou 74 et interagissent avec un siège 86 entourant l'orifice d'entrée 29a du passage 28. La combinaison des angles du siège 86, avec la compression des bagues 82 et 84 assure un ancrage parfait de l'électrode 20 sur 3 génératrices. En effet, lors du serrage de l'écrou 74, la bague de pression 82, poussée par l'épaulement interne 88 de l'écrou 74, comprime et déforme plastiquement la bague conique 84 qui vient mordre la surface extérieure de l'électrode tubulaire 20. Cela permet d'obtenir une fixation sûre et durable, ainsi qu'une très bonne résistance aux vibrations. De tels raccords sont connus dans le domaine et ne seront donc pas plus détaillés ici.

Pour garantir un espace de mesure 22 constant, on utilise de préférence des pièces d'écartement 90, ou entretoises, réparties sur la hauteur des électrodes 18, 20.

Dans la variante des Figs.1 et 2, l'électrode interne 18 est une tige pleine (sauf pour la partie de connexion tubulaire 68). Les entretoises 90 prennent alors la forme de joints annulaires ou de segments (i.e. anneaux ouverts) qui sont de préférence disposés dans des gorges annulaires 92 prévues à la surface de l'électrode 18. Comme on le comprendra, l'utilisation de segments 90 permet de monter directement l'entretoise à la hauteur voulue sur la tige d'électrode 18, sans devoir la faire remonter le long de celle-ci.

Pour permettre l'entrée de fluide dans l'espace annulaire de mesure 22, des orifices 94 sont prévus le long de l'électrode tubulaire extérieure 20, de préférence plusieurs orifices pour chaque zone entre 2 entretoises 90 consécutives. Pour faciliter davantage le remplissage de la zone de mesure 22, on pourra également prévoir des trous transversaux dans l'électrode centrale 18.

De préférence, les électrodes 18, 20 et le support métallique 26 sont réalisés en matériau bon conducteur électrique, par exemple du cuivre ou un alliage/métal approprié. Les entretoises sont en matière synthétique isolante électrique, de préférence avec une rigidité diélectrique supérieure à 60 KV.mm⁻¹, par exemple en PTFE ou en résine Teflon® PFA bien adaptée à l'injection. On notera que l'utilisation d'entretoises fabriquées avec des tolérances fines est une garantie de précision du système de mesure.

Le joint 32 est également en matière synthétique, avec une rigidité diélectrique appropriée pour garantir une isolation galvanique élevée ; PTFE ou résine Teflon® PFA sont des exemples possibles.

La fixation de l'électrode extérieure 20 au corps de jauge 14 permet la mise à la masse électrique de celle-ci. Le circuit électrique 24 comprend de préférence une plaque de circuit imprimé qui est alors connectée électriquement au corps 12 en partie haute 30, par exemple via une vis 95 assurant également sa fixation. On a ainsi un moyen simple d'assurer la connexion électrique de l'électrode extérieure 20. Par ailleurs, un fil électrique 96 connecte le pied 42 de la tige-support 26 au circuit électrique 24.

Le signe de référence 98 indique une résine de surmoulage recouvrant le circuit électrique 24 et le protégeant de l'humidité extérieure et des vibrations.

Un couvercle 100 ferme la zone aval du passage 28 ; il comprend un filetage extérieur 102 à sa périphérie, qui s'engage sur un pas de vis 102' au niveau de l'orifice 29b.

Le couvercle 100 comprend de préférence un connecteur électrique 104 permettant de raccorder la jauge 10 à un dispositif afficheur ou tout autre système capable d'exploiter le signal. Un bouchon amovible 106 protège le connecteur 104.

La présente jauge 10 est préférablement conçue avec un minimum d'électronique embarquée. La mesure ou lecture de niveau peut se faire simplement en raccordant à la jauge 10, via le connecteur 104, à un module de mesure et/ou lecture apte à mesurer la capacité entre les électrodes 18, 20 et/ou convertir le signal de mesure en indication de niveau.

De préférence, le circuit électrique 24 comprend une EEPROM ou une autre mémoire morte programmable, ce qui permet d'associer à la jauge diverses données, par exemple une ou plusieurs des données de suivantes :
- un numéro de série de la jauge ;
- la longueur des électrodes ;
- des valeurs de pré-calibration ;
- le type de gaz contenu dans le récipient/bouteille.

L'EEPROM est de préférence programmée pour réaliser la mesure capacitive, en tenant compte le cas échéant de données stockées dans l'EEPROM, et délivrer un signal indicatif de la capacité entre les électrodes 18 et 20. Dans la Fig.1, le connecteur comprend 4 broches 108 (seules 2 sont visibles) qui sont reliées chacune par un fil 110 au circuit électrique 24, 2 broches étant utilisées pour l'alimentation et 2 pour véhiculer un signal digital comprenant indicatif du niveau de fluide dans le récipient, en particulier la valeur de capacité mesurée entre les électrodes.

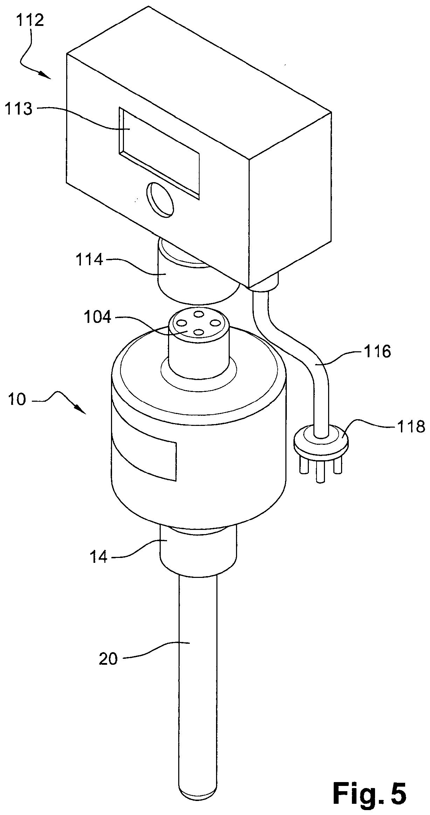

La lecture de niveau peut être réalisée au moyen d'un module afficheur 112 (Fig.5) programmé pour convertir le signal de mesure en indication de niveau, laquelle est indiquée par un afficheur 113.

Alternativement, l'EEPROM dans le corps 12 peut être programmée pour délivrer un signal correspondant directement à une valeur de niveau de remplissage, par. ex. en pourcentage de remplissage, et le module afficheur ne fait alors qu'afficher cette valeur.

Comme on le voit sur la Fig.5, le module afficheur 112 peut comprendre un connecteur 114 (ici femelle) coopérant avec le connecteur 104, ce qui permet le montage/branchement du module afficheur 112 directement sur la jauge 10. On peut également installer le module afficheur 112 plus loin du récipient, par exemple contre un mur, et le raccordement se fait alors par un câble 116, dont l'extrémité porte un connecteur 118 coopérant avec le connecteur 104 de jauge.

Le module afficheur peut alternativement/également contenir toute sorte de dispositif apte à transmettre sans fil un signal indicatif du niveau (valeur de capacité, pourcentage ou autre indication de niveau de remplissage).

Enfin, on pourrait simplement relier la jauge par câble, via le connecteur 104, à un réseau pour traitement du signal de mesure/niveau par un système informatique.

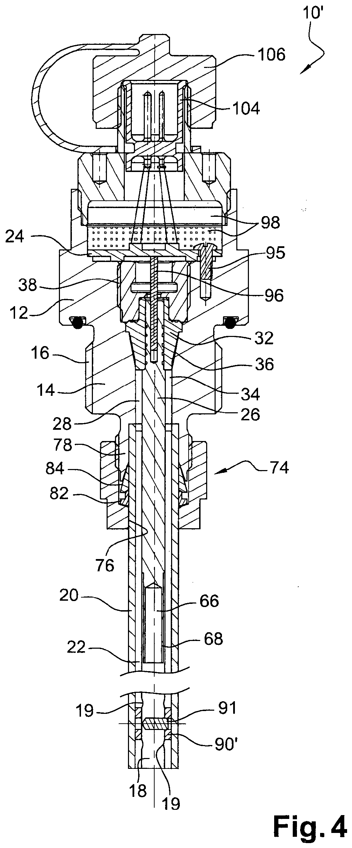

La Fig.4 illustre une autre exécution de la présente jauge 10', qui se distingue simplement en ce que l'électrode intérieure 18 est un tube (creux). Un telle géométrie est donc directement appropriée pour le raccordement par sertissage à la tige support 26. En outre, le fluide dans le récipient peut remonter par l'intérieur de l'électrode 18, et on prévoira alors des trous 19 dans l'électrode pour que le fluide puisse passer à travers la paroi de celle-ci dans l'espace de mesure 22.

Pour ne pas réduire localement l'épaisseur de paroi de l'électrode 18, on utilise dans cette variante des entretoises 90' en forme de segments de section rectangulaire avec tenon 91 s'engageant dans un orifice du tube d'électrode 18. L'entretoise est donc simplement une bande arrondie s'étendant sur au moins 75% de la périphérie de l'électrode centrale 18 et comprenant sur sa face interne, face à l'électrode 18, le tenon 91.

Dans les variantes présentées ici l'électrode intérieure 18 est fixée par sertissage à son support métallique 26 ; on pourrait toutefois envisager toute sorte de fixation appropriée pour joindre deux extrémités de tiges/tubes, par exemple soudure, vissage, ou tout autre moyen d'accouplement mécanique approprié.

## Revendications

1. Ensemble de jauge de niveau capacitive pour un récipient de gaz pressurisé ou liquéfié comprenant :
un corps (12) avec une base (14) apte à être montée dans une ouverture dudit récipient ;
une paire d'électrodes capacitives dimensionnées pour s'étendre dans le récipient, la paire d'électrodes comprenant une première électrode (18), intérieure, et une deuxième électrode (20) tubulaire entourant la première électrode ;
un circuit électrique (24) disposé dans le corps et connecté aux électrodes ;
**caractérisé en ce que**
des moyens porte-électrodes sont montés de manière étanche dans ledit corps et connectés audit circuit électrique (24), lesdits moyens porte-électrodes étant configurés pour supporter fixement les deux électrodes (18, 20) avec un espace de mesure (22) entre celles-ci ; et
les moyens porte-électrodes comprennent un support métallique (26) monté de manière étanche dans le corps (12) et électriquement isolé de celui-ci, la première électrode (18) étant fixée audit support métallique (26), et le support métallique (26) étant relié au circuit électrique (24).

2. Ensemble de jauge de niveau capacitive selon la revendication 1, dans lequel les moyens porte-électrodes comprennent un moyen de fixation pour la deuxième électrode entourant le support métallique (26); et/ou
le support métallique (26) de la première électrode (18) s'étend, vu dans l'axe longitudinal des électrodes, au-delà du moyen de fixation de la deuxième électrode (20).

3. Ensemble de jauge de niveau capacitive selon la revendication 1 ou 2, dans lequel la première électrode (18) est fixée au support métallique (26) par sertissage, vissage ou soudure; et
de préférence le support métallique (26) comprend une extrémité libre tubulaire (66) sur laquelle est montée une extrémité tubulaire (68) de la première électrode (18), lesdites extrémités étant jointes par sertissage.

4. Ensemble de jauge de niveau capacitive selon l'une quelconque des revendications précédentes, dans lequel :
le corps comprend un passage interne (28) traversant, s'étendant d'un orifice (29a) dans la base (14) du corps à un autre orifice (29b) en partie supérieure du corps;
les moyens porte-électrodes sont agencés dans la région de base (14) du corps, le support métallique (26) de la première électrode (18) étant partiellement agencé dans ledit passage traversant (28); et
de préférence le support métallique (26), dont la forme est préférablement cylindrique allongée, est maintenu dans le passage traversant au moyen d'un joint d'étanchéité (32) empêchant le passage de gaz en aval du joint d'étanchéité.

5. Ensemble de jauge de niveau capacitive selon la revendication 4, dans lequel :
le passage traversant (28) comprend une section de transition (36) entre une section amont (34) et aval (38), la section de transition (36) étant évasée vers la section aval (38) ; et
le joint d'étanchéité (32) est disposé dans la section de transition (36) et a une portion évasée (44) dont le profil extérieur est adapté à la section de transition (36), de préférence tronconique; et
de préférence le joint d'étanchéité (32) est comprimé par une pièce de montage (52) positionnée dans la section aval (38) et s'appuyant sur un épaulement arrière (58) du joint (32) à la base de la portion évasée (44).

6. Ensemble de jauge de niveau capacitive selon la revendication 5, dans lequel le joint comprend à l'opposé de sa portion évasée (44) une portion cylindrique (48) s'engageant dans une cavité (50) dans la pièce de montage (52); et
de préférence la pièce de montage (52) est une bague avec filetage externe qui coopère avec un pas de vis dans la section aval (38), la bague (52) comprenant une face frontale (57) s'appuyant d'une part sur l'épaulement arrière (58) du joint (32) et sur un épaulement (60) de la section aval; et
de préférence la portion évasée (44) du joint comprend une saille annulaire radiale (46) définissant un deuxième épaulement frontal (62) s'appuyant sur un épaulement (64) à la base de la section de transition (36).

7. Ensemble de jauge de niveau capacitive selon l'une quelconque des revendications 4 à 6, dans lequel le joint comprend un canal (40) qui reçoit une portion de pied (42) du support métallique (46), de préférence sur l'ensemble de la hauteur du joint (32); et
de préférence un élément conducteur relie le pied (42) du support métallique au circuit électrique (24).

8. Ensemble de jauge de niveau capacitive selon l'une quelconque des revendications précédentes, dans lequel la base (14) du corps comprend une portion terminale (78) traversée par le passage (28) et la deuxième électrode (20) est insérée dans le passage (28), de préférence en butée contre un épaulement (72); et
de préférence la deuxième électrode est maintenue en position par serrage ou friction.

9. Ensemble de jauge de niveau capacitive selon l'une quelconque des revendications précédentes, **caractérisé en ce que** la première électrode est pleine ou tubulaire, et **en ce que** des entretoises isolantes sont distribuées le long de l'électrode centrale pour maintenir l'espace de mesure annulaire.

10. Ensemble de jauge de niveau capacitive selon l'une quelconque des revendications précédentes, **caractérisé en ce que** le circuit électrique (24) comprend une mémoire morte programmable contenant au moins l'une des informations suivantes : un numéro de série, longueur des électrodes, valeur(s) de pré-calibration, type de gaz ; et en **en ce que** la mémoire est programmée pour délivrer un signal indicatif du niveau de fluide dans le récipient.

11. Ensemble de jauge de niveau capacitive selon l'une quelconque des revendications précédentes, **caractérisé en ce qu'**il comprend un connecteur (104) pour l'alimentation du circuit électrique (24) et la transmission d'un signal indicatif du niveau de fluide vers un module afficheur (112) ou un système apte à traiter le signal et/ou afficher le niveau.

12. Ensemble de jauge de niveau capacitive selon l'une quelconque des revendications précédentes, **caractérisé en ce qu'**elle ne comprend pas les première (18) et deuxième (20) électrodes.

13. Ensemble de jauge de niveau capacitive selon l'une quelconque des revendications précédentes, **caractérisé en ce que** le support métallique comprend à son extrémité libre un moyen de couplage (66) adapté à la fixation de la première électrode (18), de préférence coopérant avec un moyen de couplage (68) à l'extrémité de première électrode (18).

14. Ensemble de robinet et jauge de niveau comprenant une jauge de niveau selon l'une quelconque des revendications précédentes et dans le corps de jauge un passage de gaz avec un siège d'étanchéité et un organe d'obturation apte à être positionné sur le siège pour obturer l'écoulement dans le passage de gaz et à être enlevé du siège par l'intermédiaire d'un moyen d'actionnement.

15. Module de jauge de niveau capacitive pour un récipient de gaz pressurisé ou liquéfié comprenant :
un corps (12) avec une base (14) apte à être montée dans une ouverture dudit récipient ;
un circuit électrique (24) disposé dans le corps ;
**caractérisé en ce que** le module de jauge de niveau capacitive comprend :
des moyens porte-électrodes montés de manière étanche dans ledit corps et connectés audit circuit électrique (24), lesdits moyens porte-électrodes étant configurés pour supporter fixement une paire d'électrodes capacitives (18, 20) avec un espace de mesure (22) entre celles-ci ;
les moyens porte-électrodes comprennent un support métallique (26) monté de manière étanche dans le corps (12) et électriquement isolé de celui-ci, le support métallique (26) étant relié au circuit électrique (24) et apte à supporter une première électrode interne, de préférence par un moyen de couplage (66) prévu à une extrémité libre du support métallique (26).

## Patentansprüche

1. Kapazitive Füllstandsonde-Einheit für einen Flüssig- oder Druckgas-Behälter umfassend:
einen Körper (12) mit einer Basis (14), die geeignet ist, in einer Öffnung des Behälters montiert zu werden,
ein Paar kapazitiver Elektroden mit derartigen Abmessungen, dass sie sich in den Behälter erstrecken, wobei das Elektrodenpaar eine erste interne Elektrode (18) und eine zweite rohrförmige, die erste Elektrode umschließende Elektrode (20) aufweist,
einen Schaltkreis (24), der in dem Körper angeordnet ist und mit den Elektroden verbunden ist,
**dadurch gekennzeichnet, dass**
Elektrodentragmittel in den Körper dicht montiert und mit dem Schaltkreis (24) verbunden sind, wobei die Elektrodentragmittel ausgestaltet sind, um die zwei Elektroden (18, 20) fest mit einem Messraum (22) zwischen ihnen zu tragen und
die Elektrodentragmittel einen Metallträger (26) aufweisen, der in den Körper (12) dicht montiert und gegen diesen elektrisch isoliert ist, wobei die erste Elektrode (18) an dem Metallträger (26) befestigt ist und der Metallträger (26) mit dem Schaltkreis (24) verbunden ist.

2. Kapazitive Füllstandsonde-Einheit nach Anspruch 1, bei der die Elektrodentragmittel ein Befestigungsmittel für die zweite, den Metallträger (26) umschließenden Elektrode aufweisen und/oder
der Metallträger (26) der ersten Elektrode (18) sich nach der Längsachse der Elektroden betrachtet über das Befestigungsmittel der zweiten Elektrode (20) hinaus erstreckt.

3. Kapazitive Füllstandsonde-Einheit nach Anspruch 1 oder 2, bei der die erste Elektrode (18) durch Crimpen, Verschraubung oder Schweißen an dem Metallträger (26) befestigt ist und
vorzugsweise der Metallträger (26) ein freies rohrförmiges Ende (66) aufweist, auf das ein rohrförmiges Ende (68) der ersten Elektrode (18) montiert ist, wobei die Enden durch Crimpen verbunden sind.

4. Kapazitive Füllstandsonde-Einheit nach einem beliebigen der vorhergehenden Ansprüche, bei der:
der Körper einen internen Durchgang(28) aufweist, die sich von einer Öffnung (29a) in der Basis (14) des Körpers zu einer anderen Öffnung (29b) im oberen Teil des Körpers erstreckt,
die Elektrodentragmittel im Bereich der Basis (14) des Körpers angeordnet sind, wobei der Metallträger (26) der ersten Elektrode (18) teilweise in dem Durchgang (28) angeordnet ist, und
vorzugsweise der Metallträger (26), dessen Form bevorzugt länglich zylindrisch ist, in dem Durchgang mittels einer Dichtung (32) gehaltert ist, die das Durchfließen von Gas unterhalb der Dichtung verhindert.

5. Kapazitive Füllstandsonde-Einheit nach Anspruch 4, bei der der Durchgang (28) einen Übergangsabschnitt (36) zwischen einem oberen (34) und einem unteren (38) Abschnitt aufweist, wobei der Übergangsabschnitt (36) sich zum unteren Abschnitt (38) hin ausweitet und die Dichtung (32)in dem Übergangsabschnitt (36) angeordnet ist und einen ausgeweiteten Abschnitt (44) aufweist, dessen Außenprofil an den vorzugsweise kegelstumpfförmigen Übergangsabschnitt (36) angepasst ist, und vorzugsweise die Dichtung (32) durch ein Montageteil (52) zusammengepresst ist, das sich in dem unteren Abschnitt (38) befindet und sich gegen einen hinteren Absatz (58) der Dichtung (32) an der Basis des ausgeweiteten Abschnitts (44) abstützt.

6. Kapazitive Füllstandsonde-Einheit nach Anspruch 5, bei der die Dichtung gegenüber ihrem ausgeweiteten Abschnitt (44) einen zylindrischen Abschnitt (48) aufweist, der in eine Ausnehmung (50) in dem Montageteil (52) greift, und
vorzugsweise das Montageteil (52) ein Ring mit Außengewinde ist, das mit einem Schraubengewinde in dem unteren Abschnitt (38) zusammenwirkt, wobei der Ring (52) eine Frontseite (57) aufweist, die sich einerseits gegen den hinteren Absatz (58) der Dichtung (32) und gegen einen Absatz (60) des unteren Abschnitts abstützt, und
vorzugsweise der ausgeweitete Abschnitt (44) der Dichtung einen radialen ringförmigen Vorsprung (46) aufweist, der einen zweiten Frontabsatz (62) definiert, der sich gegen einen Absatz (64) an der Basis des Übergangsabschnitts (36) abstützt.

7. Kapazitive Füllstandsonde-Einheit nach einem beliebigen der Ansprüche 4 bis 6, bei der die Dichtung einen Kanal (40) aufweist, der einen Fußabschnitt (42) des Metallträgers (46) vorzugsweise auf der gesamten Höhe der Dichtung (32) aufnimmt, und
vorzugsweise ein leitendes Element den Fuß (42) des Metallträgers mit dem Schaltkreis (24) verbindet.

8. Kapazitive Füllstandsonde-Einheit nach einem beliebigen der vorhergehenden Ansprüche, bei der die Basis (14) des Körpers einen Endabschnitt (78) aufweist, durch den der Durchgang (28) durchgeht, und die zweite Elektrode (20) in den Durchgang (28) eingeführt ist, vorzugsweise gegen einen Absatz (72) anschlägt, und
vorzugsweise die zweite Elektrode durch Klemmung oder Reibung in ihrer Position gehaltert wird.

9. Kapazitive Füllstandsonde-Einheit nach einem beliebigen der vorhergehenden Ansprüche, **dadurch gekennzeichnet, dass** die erste Elektrode voll oder rohrförmig ist und dass Isolierstege entlang der zentralen Elektrode verteilt sind, um den ringförmigen Messraum aufrechtzuerhalten.

10. Kapazitive Füllstandsonde-Einheit nach einem beliebigen der vorhergehenden Ansprüche, **dadurch gekennzeichnet, dass** der Schaltkreis (24) einen programmierbaren Festspeicher mit mindestens einer der folgenden Informationen: eine Seriennummer, Länge der Elektroden, Vorkalibrierungswert(e), Gastyp, und dass der Speicher programmiert ist, um ein Signal zu liefern, das den Fluidfüllstand in dem Behälter anzeigt.

11. Kapazitive Füllstandsonde-Einheit nach einem beliebigen der vorhergehenden Ansprüche, **dadurch gekennzeichnet, dass** sie einen Verbinder (104) für die Versorgung des Schaltkreises (24) und die Übertragung eines den Fluidfüllstand anzeigenden Signals zu einem Anzeigemodul (112) oder einem System aufweist, das geeignet ist, das Signal zu verarbeiten und/oder den Füllstand anzuzeigen.

12. Kapazitive Füllstandsonde-Einheit nach einem beliebigen der vorhergehenden Ansprüche, **dadurch gekennzeichnet, dass** sie die erste (18) und zweite (20) Elektroden nicht umfasst.

13. Kapazitive Füllstandsonde-Einheit nach einem beliebigen der vorhergehenden Ansprüche, **dadurch gekennzeichnet, dass** der Metallträger an seinem freien Ende ein Kopplungsmittel (66) aufweist, das für die Befestigung der ersten Elektrode (18) geeignet ist und vorzugsweise mit einem Kopplungsmittel (69) am Ende der ersten Elektrode (18) zusammenwirkt.

14. Einheit aus einem Ventil und einer Füllstandsonde mit einer Füllstandsonde nach einem beliebigen der vorhergehenden Ansprüche und in dem Füllstandsondenkörper einen Gasdurchgang mit einem Dichtsitz und einem Sperrorgan, das geeignet ist, auf dem Sitz positioniert zu werden, um den Fluss in dem Gasdurchgang zu sperren, und vom Sitz mittels eines Aktuators entfernt zu werden.

15. Kapazitives Füllstandsonde-Modul für einen Flüssig- oder Druckgas-Behälter umfassend:
einen Körper (12) mit einer Basis (14), die geeignet ist, in einer Öffnung des Behälters montiert zu werden,
einen Schaltkreis (24), der in dem Körper angeordnet ist,
**dadurch gekennzeichnet, dass**
Elektrodentragmittel in den Körper dicht montiert und mit dem Schaltkreis (24) verbunden sind, wobei die Elektrodentragmittel ausgestaltet sind, um ein paar kapazitiver Elektroden (18, 20) fest mit einem Messraum (22) zwischen ihnen zu tragen,
die Elektrodentragmittel einen Metallträger (26) aufweisen, der in den Körper (12) dicht montiert und gegen diesen elektrisch isoliert ist, wobei der Metallträger (26) mit dem Schaltkreis (24) verbunden ist und geeignet ist, eine erste interne Elektrode, vorzugsweise mittels eines Kopplungsmittels (66) zu tragen, das an einem freien Ende des Metallträgers (26) vorgesehen ist.

## Claims

1. A capacitive level gauge assembly for a pressurised or liquefied gas container comprising:
a body (12) with a base (14) capable of being fitted in an opening of said container;
a pair of capacitive electrodes dimensioned to extend into the container, the pair of electrodes comprising a first inner electrode (18) and a second tubular electrode (20) surrounding the first electrode;
an electrical circuit (24) arranged in the body and connected to the electrodes;
**characterised in that**
electrode-carrying means are fitted in leakproof manner in said body and connected to said electrical circuit (24), said electrode-carrying means being configured to support the two electrodes (18, 20) fixedly with a measurement space (22) therebetween; and
the electrode-carrying means comprise a metallic support (26) fitted in leakproof manner in the body (12) and electrically insulated therefrom, the first electrode (18) being fixed to said metallic support (26), and the metallic support (26) being connected to the electrical circuit (24).

2. A capacitive level gauge assembly according to claim 1, in which the electrode-carrying means comprise a fixing means for the second electrode surrounding the metallic support (26); and/or
the metallic support (26) of the first electrode (18) extends, viewed in the longitudinal axis of the electrodes, beyond the fixing means of the second electrode (20).

3. A capacitive level gauge assembly according to claim 1 or 2, in which the first electrode (18) is fixed to the metallic support (26) by crimping, screwing or welding; and
preferably the metallic support (26) comprises a tubular free end (66) on which is fitted a tubular end (68) of the first electrode (18), said ends being joined by crimping.

4. A capacitive level gauge assembly according to any one of the preceding claims, in which:
the body comprises an internal through-passage (28) extending from an orifice (29a) in the base (14) of the body to another orifice (29b) in the upper part of the body;
the electrode-carrying means are arranged in the region of the base (14) of the body, the metallic support (26) of the first electrode (18) being partially arranged in said through-passage (28); and
preferably the metallic support (26), which is preferably of an elongate cylindrical shape, is held in the through-passage by means of a sealing gasket (32) preventing gas from passing downstream of the gasket.

5. A capacitive level gauge assembly according to claim 4, in which:
the through-passage (28) comprises a transitional section (36) between an upstream (34) and a downstream (38) section, the transitional section (36) being flared towards the downstream section (38); and
the sealing gasket (32) is arranged in the transitional section (36) and has a flared portion (44), the external profile external of which is adapted to the transitional section (36), preferably frustoconical; and
preferably the sealing gasket (32) is compressed by a fitting part (52) positioned in the downstream section (38) and resting on a rear shoulder (58) of the gasket (32) at the base of the flared portion (44).

6. A capacitive level gauge assembly according to claim 5, in which the gasket comprises, at the opposite end to the flared portion (44) thereof, a cylindrical portion (48) which engages in a cavity (50) in the fitting part (52); and
preferably the fitting part (52) is an externally threaded ring which cooperates with a screw thread in the downstream section (38), the ring (52) comprising a front face (57) resting on the one hand on the rear shoulder (58) of the gasket (32) and on a shoulder (60) of the downstream section; and
preferably the flared portion (44) of the gasket comprises a radial annular protrusion (46) defining a second front shoulder (62) resting on a shoulder (64) at the base of the transitional section (36).

7. A capacitive level gauge assembly according to any one of claims 4 to 6, in which the gasket comprises a channel (40) which receives a foot portion (42) of the metallic support (46), preferably over the entire height of the gasket (32); and
preferably a conductive element connects the foot (42) of the metallic support to the electrical circuit (24).

8. A capacitive level gauge assembly according to any one of the preceding claims, in which the base (14) of the body comprises an end portion (78) passed through by the passage (28) and the second electrode (20) is inserted in the passage (28), preferably abutting against a shoulder (72); and
preferably the second electrode is held in position by clamping or friction.

9. A capacitive level gauge assembly according to any one of the preceding claims, **characterised in that** the first electrode is solid or tubular, and **in that** insulating struts are distributed along the central electrode in order to maintain the annular measurement space.

10. A capacitive level gauge assembly according to any one of the preceding claims, **characterised in that** the electrical circuit (24) comprises a programmable read-only memory containing at least one of the following items of information: a serial number, length of the electrodes, precalibration value(s), type of gas; and **in that** the memory is programmed to output a signal indicating the level of fluid in the container.

11. A capacitive level gauge assembly according to any one of the preceding claims, **characterised in that** it comprises a connector (104) for supplying power to the electrical circuit (24) and transmitting a signal indicating the level of fluid to a display module (112) or a system capable of processing the signal and/or displaying the level.

12. A capacitive level gauge assembly according to any one of the preceding claims, **characterised in that** it does not comprise the first (18) and second (20) electrodes.

13. A capacitive level gauge assembly according to any one of the preceding claims, **characterised in that** the metallic support comprises at the free end thereof a coupling means (66) suitable for fixing to the first electrode (18), preferably cooperating with a coupling means (68) at the end of the first electrode (18).

14. A valve and level gauge assembly comprising a level gauge according to any one of the preceding claims and, in the gauge body, a gas passage with a sealing seat and a closing member capable of being positioned on the seat to close off flow in the gas passage and of being removed from the seat by means of an actuating means.

15. A capacitive level gauge module for a pressurised or liquefied gas container comprising:
a body (12) with a base (14) capable of being fitted in an opening of said container;
an electrical circuit (24) arranged in the body;
**characterised in that** the capacitive level gauge module comprises:
electrode-carrying means fitted in leakproof manner in said body and connected to said electrical circuit (24), said electrode-carrying means being configured to support a pair of capacitive electrodes (18, 20) fixedly with a measurement space (22) therebetween;
the electrode-carrying means comprise a metallic support (26) fitted in leakproof manner in the body (12) and electrically insulated therefrom, the metallic support (26) being connected to the electrical circuit (24) and capable of supporting a first inner electrode, preferably by a coupling means (66) provided at a free end of the metallic support (26).
